# EUROPEAN PATENT APPLICATION

(11) **EP 4 756 613 A1**
(43) Date of publication of application: **10.06.2026**
(21) Application number: 25802717.6
(22) Date of filing: 30.04.2025
(51) Int. Cl.: G06F 9/455

(54) **DEVICE MANAGEMENT METHOD AND ELECTRONIC DEVICE**

(30) Priority: 13.05.2024 CN 202410594602
(71) Applicant: HUAWEI TECHNOLOGIES CO., LTD., Shenzhen 518129 (CN)
(72) Inventor: LI, Yadong, Shenzhen, Guangdong 518129 (CN)
(74) Representative: Gill Jennings & Every LLP
(86) International application number: PCT/CN2025/092647
(87) International publication number: WO 2025/237094

(57) **Abstract**

Embodiments of this application disclose a device management method and an electronic device. Before a container is run, a container inside-outside bridged directory of a host machine is set as a load point A, and a propagation attribute of the load point A is set to shared; and when the container is run, the load point A is mapped to a load point B in the container, and a propagation attribute of the load point B is set to shared, to support bidirectional propagation of a mapping action between the load point A of the host machine and the load point B in the container. In this way, on the premise that the container is not run again, an inserted device may be mapped to the container by using the container inside-outside bridged directory of the host machine, so that an application in the container may access the device; and after the device is removed, the device may be unmapped from the container, so that the application in the container cannot access the device. In addition, on the premise that the container is not run again and the device remains inserted, the device may be independently unmapped from the container, without affecting use of the device by the host machine.

## Description

This application claims priority to Chinese Patent Application No. 202410594602.8, filed with the China National Intellectual Property Administration on May 13, 2024 and entitled "DEVICE MANAGEMENT METHOD AND ELECTRONIC DEVICE", which is incorporated herein by reference in its entirety.

### TECHNICAL FIELD

This application relates to the field of terminal technologies, and in particular, to a device management method and an electronic device.

### BACKGROUND

An electronic device runs a host machine operating system, and the host machine operating system may run a container. The container may use a kernel of the host machine operating system, and create an isolated running environment on the host machine operating system. Each container has its own file system, process space, network space, and the like, and is isolated from other containers. However, the containers share the kernel of the host machine operating system.

When using an application in the container (for example, a Linux container), a user has a requirement for reading and writing a file in a device (for example, a mobile device like a USB flash drive or a hard disk, or a network device like a web disk). However, in a scenario in which the user first runs the application in the container, if the user hot plugs the device (to be specific, during running of the electronic device, the user inserts or removes the device without shutting down or restarting the electronic device), the application in the container cannot read and write data of the device due to an isolation technology of the container. In this way, the user cannot read and write the data of the device through the container when the device is hot plugged after the container is run. This is inconvenient for the user to use an external device, and affects user experience.

### SUMMARY

This application discloses a device management method and an electronic device. Before a container is run, a container inside-outside bridged directory of a host machine is set as a load point A, and a propagation attribute of the load point A is set to shared; and when the container is run, the load point A is mapped to a load point B in the container, and a propagation attribute of the load point B is set to shared, to support bidirectional propagation of a mapping action between the load point A of the host machine and the load point B in the container. In this way, on the premise that the container is not run again, an inserted device may be mapped to the container by using the container inside-outside bridged directory of the host machine, so that an application in the container may access the device; and after the device is removed, the device may be unmapped from the container, so that the application in the container cannot access the device. In addition, on the premise that the container is not run again and the device remains inserted, the device may be independently unmapped from the container, without affecting use of the device by the host machine.

According to a first aspect, this application provides a device management method, applied to a first electronic device. The first electronic device runs a host machine operating system, and the host machine operating system runs a first container. The method includes: Before the first container is started, the first electronic device creates a first bridged directory in the host machine operating system, and sets the first bridged directory as a first load point; when the first container is started, the first electronic device creates a second load point in the first container based on information about the first load point; after the first container is started, a notification that a device is inserted is obtained, and the first electronic device obtains a path of the device in the host machine operating system, and maps the path of the device to a first directory at the first load point, where that the path of the device is mapped to the first directory is a first mapping action; the first electronic device propagates the first mapping action to the second load point in the first container by using the first load point in the host machine operating system; and the first electronic device obtains, in the first container, a second directory at the second load point based on the first mapping action.

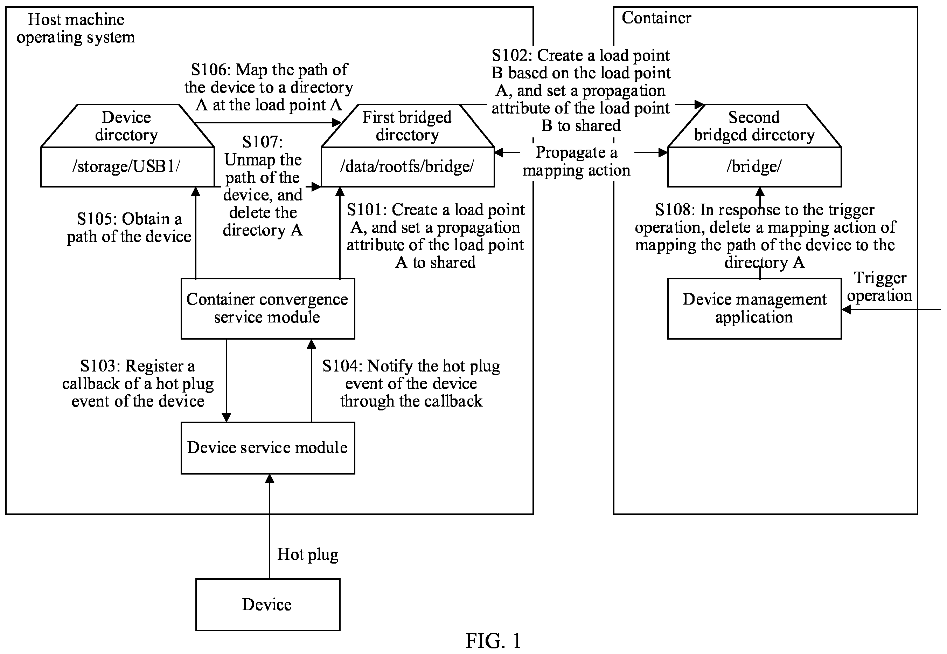

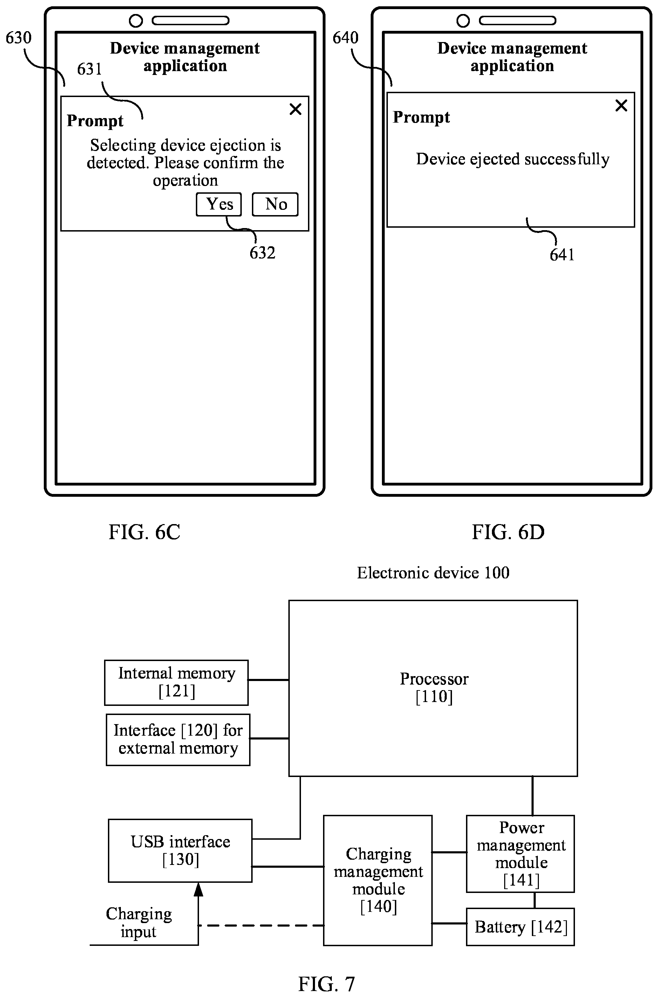

The first electronic device may be an electronic device 100 shown in FIG. 7. The first container may be a container (for example, a Linux container) shown in FIG. 1, FIG. 3, or FIG. 5. The first bridged directory may be a container inside-outside bridged directory (for example, /data/rootfs/bridge/) of the host machine operating system. The first load point may be a load point A (for example, /data/rootfs/bridge/), and the second load point may be a load point B (for example, /bridge/). The path of the device may be, for example, /storage/USB1/. The first directory may be a directory A (for example, /data/rootfs/bridge/USB 1/). The second directory may be a directory B (for example, /bridge/USB1/).

According to the method provided in the first aspect, on the premise that the container is not run again, the inserted device may be mapped to the container by using the container inside-outside bridged directory of a host machine, so that an application in the container may access the device. In this way, a plug-and-play function of the device can be implemented, so that the application in the container run on the host machine operating system may use a device on a host machine side, thereby meeting a requirement of a user for convenient use of an external device, and improving user experience.

With reference to the first aspect, in some embodiments, a propagation attribute of the first load point is set to shared, and a propagation attribute of the second load point is set to shared.

In this way, the electronic device may support bidirectional propagation of a mapping action between the load point A of the host machine and the load point B in the container.

With reference to the first aspect, in some embodiments, that the first electronic device creates the second load point in the first container based on the information about the first load point specifically includes: The first electronic device maps the first bridged directory to a second bridged directory in the first container through the host machine operating system, and creates the second bridged directory as the second load point in the first container.

The second bridged directory may be a container inside-outside bridged directory (for example, /bridge/USB1/) of the container.

With reference to the first aspect, in some embodiments, the method further includes: After the first container is started, a notification that the device is removed is obtained; and the first electronic device unmaps, in the host machine operating system, the path of the device from the first directory at the first load point, and deletes the first directory at the first load point.

In this way, after the device is removed, the electronic device may unmap the device from the container, so that the application in the container cannot access the device.

With reference to the first aspect, in some embodiments, the method further includes: When the device remains inserted, in response to a trigger operation, the first electronic device deletes, in the first container, the mapping action that is of mapping the path of the device to the first directory and that is received by the second load point from the first load point in the host machine operating system.

In this way, on the premise that the container is not run again and the device remains inserted, the electronic device may independently unmap the device from the container, without affecting use of the device by the host machine.

With reference to the first aspect, in some embodiments, the host machine operating system includes a container convergence service module and a device service module. That the notification that the device is inserted is obtained, and the first electronic device obtains the path of the device in the host machine operating system, and maps the path of the device to the first directory at the first load point specifically includes: If the first electronic device detects, through the device service module, that the device is inserted, the device service module notifies the container convergence service module through a callback; and the first electronic device obtains, in the host machine operating system, the path of the device from the device service module through the container convergence service module, and maps the path of the device to the first directory at the first load point.

In this way, the electronic device may support quickly detecting a hot plug event of the device, thereby reducing system power consumption.

With reference to the first aspect, in some embodiments, the device service module includes a first interface, and the first interface is configured to register a callback of a hot plug event of the device.

With reference to the first aspect, in some embodiments, that the notification that the device is inserted is obtained specifically includes: The first electronic device receives, in the host machine operating system, a trigger operation through a first application. That the first electronic device obtains the path of the device in the host machine operating system, and maps the path of the device to the first directory at the first load point specifically includes: The first electronic device obtains, in the host machine operating system, the path of the device through the first application, and maps the path of the device to the first directory at the first load point.

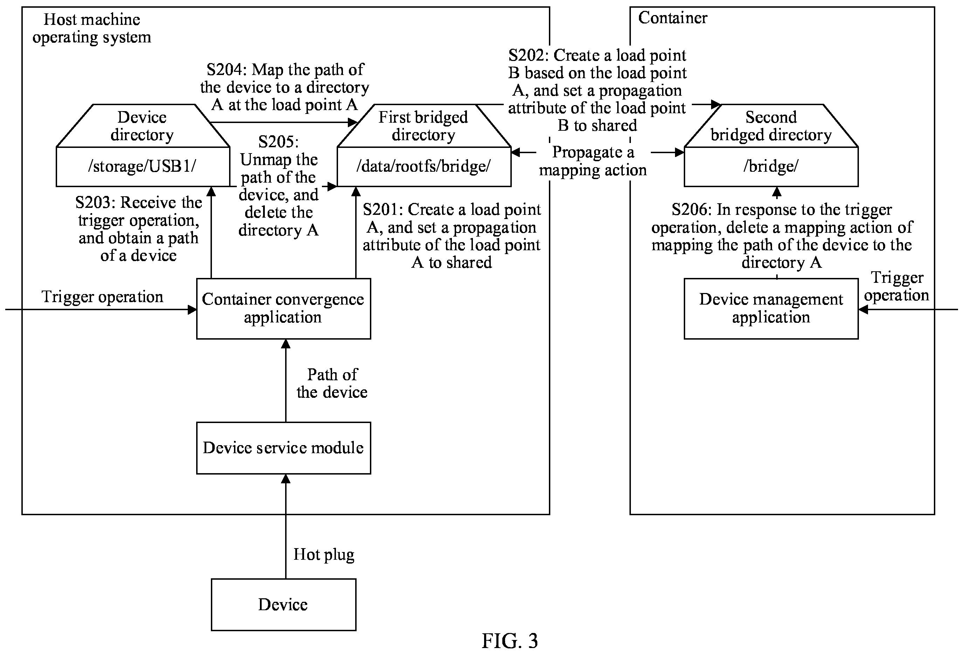

The first application may be a container convergence application shown in FIG. 3.

In this way, the electronic device may support the user in manually controlling hot plugging of the device in the container during running of the container, so that the user may open a file in the device in the container without running the container again, thereby improving user experience.

With reference to the first aspect, in some embodiments, that the notification that the device is inserted is obtained specifically includes: The first electronic device receives, in the first container, a trigger operation through a second application; and the first electronic device sends, in the first container, a first notification to the host machine operating system, where the first notification indicates that the device is inserted.

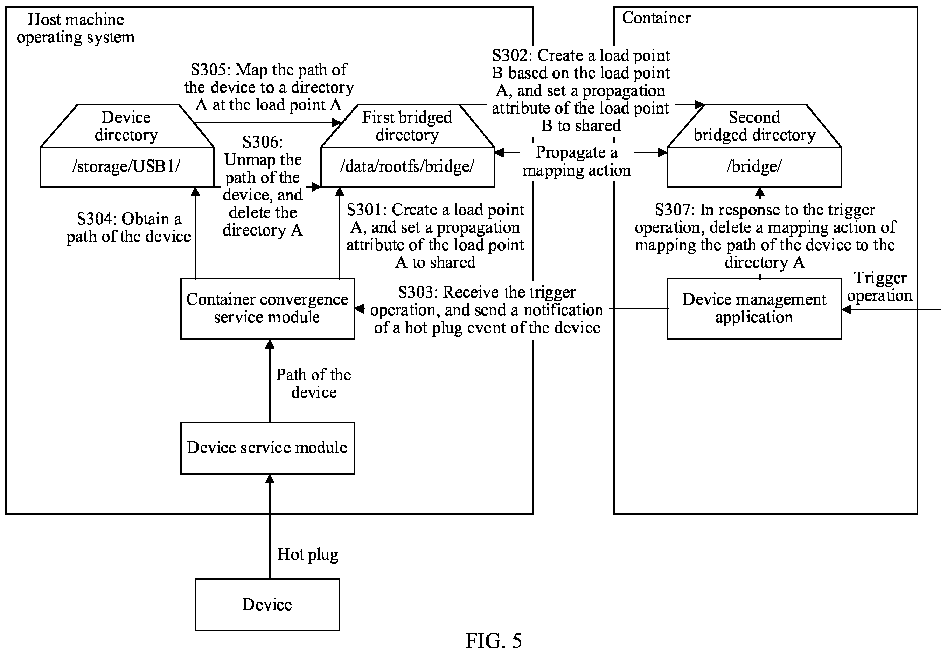

The second application may be a device management application shown in FIG. 5.

In this way, the electronic device 100 may support the user in manually controlling hot plugging of the device in the container during running of the container, so that the user may open a file in the device in the container without running the container again, thereby improving user experience.

According to a second aspect, this application provides an electronic device. The electronic device runs a host machine operating system, and the host machine operating system runs a first container. Before the first container is started, the host machine operating system is configured to create a first bridged directory, and set the first bridged directory as a first load point; when the first container is started, the first container is configured to create a second load point based on information about the first load point; after the first container is started, a notification that a device is inserted is obtained, and the host machine operating system is configured to obtain a path of the device, and map the path of the device to a first directory at the first load point, where that the path of the device is mapped to the first directory is a first mapping action; the host machine operating system is configured to propagate the first mapping action to the second load point in the first container by using the first load point; and the first container is configured to obtain a second directory at the second load point based on the first mapping action.

With reference to the second aspect, in some embodiments, a propagation attribute of the first load point is set to shared, and a propagation attribute of the second load point is set to shared.

With reference to the second aspect, in some embodiments, the first container is specifically configured to create a second bridged directory as the second load point; and the host machine operating system is configured to map the first bridged directory to the second bridged directory in the first container.

With reference to the second aspect, in some embodiments, after the first container is started, the host machine operating system is further configured to obtain a notification that the device is removed; and the host machine operating system is further configured to unmap the path of the device from the first directory at the first load point, and delete the first directory at the first load point.

With reference to the second aspect, in some embodiments, when the device remains inserted, in response to a trigger operation, the first container is further configured to delete the mapping action that is of mapping the path of the device to the first directory and that is received by the second load point from the first load point in the host machine operating system.

With reference to the second aspect, in some embodiments, the host machine operating system includes a container convergence service module and a device service module; and if it is detected that the device is inserted, the device service module is configured to notify the container convergence service module through a callback; and the container convergence service module is configured to obtain the path of the device from the device service module, and map the path of the device to the first directory at the first load point.

With reference to the second aspect, in some embodiments, the device service module includes a first interface, and the first interface is configured to register a callback of a hot plug event of the device.

With reference to the second aspect, in some embodiments, the host machine operating system is specifically configured to receive a trigger operation through a first application; and the host machine operating system is specifically configured to obtain the path of the device through the first application, and map the path of the device to the first directory at the first load point.

With reference to the second aspect, in some embodiments, the host machine operating system is specifically configured to receive a first notification sent by the first container, where the first notification indicates that the device is inserted; and the first container is configured to receive a trigger operation through a second application.

According to a third aspect, this application provides a computer-readable storage medium. The computer-readable storage medium stores a computer program or computer instructions, and the computer program or the computer instructions are executed by a processor to implement the method according to any one of the first aspect.

According to a fourth aspect, this application provides a computer program product. When the computer program product is executed by a processor, the method according to any one of the first aspect is implemented.

According to a fifth aspect, this application provides a chip. The chip includes a processor and a memory, the memory is configured to store a computer program or computer instructions, and the processor is configured to execute the computer program or the computer instructions stored in the memory, to cause the chip to perform the method according to any one of the first aspect.

The solutions provided in the second aspect to the fifth aspect are used to implement or cooperate to implement the method according to the first aspect, and therefore, can achieve beneficial effects the same as or corresponding to those of the method according to the first aspect. Details are not described again.

### BRIEF DESCRIPTION OF DRAWINGS

FIG. 1 is a schematic flowchart of a device management method according to an embodiment of this application;
FIG. 2A to FIG. 2C are diagrams of a group of interfaces according to an embodiment of this application;
FIG. 3 is a schematic flowchart of another device management method according to an embodiment of this application;
FIG. 4A to FIG. 4F are diagrams of another group of interfaces according to an embodiment of this application;
FIG. 5 is a schematic flowchart of another device management method according to an embodiment of this application;
FIG. 6A to FIG. 6D are diagrams of another group of interfaces according to an embodiment of this application; and
FIG. 7 is a diagram of a structure of an electronic device 100 according to an embodiment of this application.

### DESCRIPTION OF EMBODIMENTS

Terms used in embodiments of this application are merely for the purpose of describing specific embodiments, but are not intended to limit this application.

An electronic device runs a host machine operating system, and the host machine operating system may run a container. The container may use a kernel of the host machine operating system, and create an isolated running environment on the host machine operating system. Each container has its own file system, process space, network space, and the like, and is isolated from other containers. However, the containers share the kernel of the host machine operating system.

When using an application in the container (for example, a Linux container), a user has a requirement for reading and writing a file in a device (for example, a mobile device like a USB flash drive or a hard disk, or a network device like a web disk). However, in a scenario in which the user first runs the application in the container, if the user hot-plugs the device (to be specific, during running of the electronic device, the user inserts or removes the device without shutting down the system or restarting the electronic device), the application in the container cannot read and write data of the device due to an isolation technology of the container. In this way, the user cannot read and write the data of the device through the container when the device is hot-plugged after the container is run. This is inconvenient for the user to use an external device, and affects user experience.

Currently, after it is detected that the device is hot-plugged, the container may be run again, so that the data of the device is read and written through the container. This greatly increases system power consumption, and severely affects user experience.

Based on the foregoing problems, embodiments of this application provide a device management method and an electronic device. Before a container is run, a container inside-outside bridged directory of a host machine is set as a load point A, and a propagation attribute of the load point A is set to shared; and when the container is run, the load point A is mapped to a load point B in the container, and a propagation attribute of the load point B is set to shared, to support bidirectional propagation of a mapping action between the load point A of the host machine and the load point B in the container. In this way, on the premise that the container is not run again, an inserted device may be mapped to the container by using the container inside-outside bridged directory of the host machine, so that an application in the container may access the device; and after the device is removed, the device may be unmapped from the container, so that the application in the container cannot access the device. In addition, on the premise that the container is not run again and the device remains inserted, the device may be independently unmapped from the container, without affecting use of the device by the host machine. In this way, a plug-and-play function of the device can be implemented, so that the application in the container run on a host machine operating system may use a device on a host machine side, thereby meeting a requirement of a user for convenient use of an external device, and improving user experience.

First, a schematic flowchart of a device management method according to an embodiment of this application is described.

FIG. 1 shows an example of a specific procedure of a device management method according to an embodiment of this application.

The method may be applied to an electronic device 100. The electronic device 100 runs a host machine operating system, and the host machine operating system runs a container. The host machine operating system may include a container convergence service module and a device service module. The container convergence service module may obtain a notification of a hot plug event of a device by registering a callback of the hot plug event of the device with the device service module; may map the device to the host machine operating system (to be specific, obtain a path of the device in the host machine operating system and map the path to a container inside-outside bridged directory) when the device is inserted; may unmap the device (to be specific, unmap the path of the device from the container inside-outside bridged directory) when the device is removed; or may create a load point in the host machine operating system. The device service module may learn of hot plugging of the device. The container may run a device management application. The device management application may manage ejection of the device in the container.

The foregoing host machine operating system and an operating system in the container may be operating systems of a same type (for example, both are Linux operating systems), or may be two different types of operating systems (for example, the host machine operating system is a Windows operating system, and the operating system in the container is a Linux operating system). This is not limited in this embodiment of this application.

The foregoing device is a device that has a corresponding directory (path) in the host machine operating system after being inserted into a host machine, and may include but is not limited to a storage device, for example, a mobile device like a USB flash drive or a hard disk, or a network device like a web disk.

As shown in FIG. 1, the method may include the following steps.

S101: Create a load point A, and set a propagation attribute of the load point A to shared.

Specifically, before the container is run, the container convergence service module in the host machine operating system may set a first bridged directory (for example, /data/rootfs/bridge/) as the load point A, and set the propagation attribute of the load point A to shared. The first bridged directory is the container inside-outside bridged directory of the host machine operating system. The first bridged directory is a file directory that is created by the electronic device 100 in a file system of the host machine operating system and that may be bridged or mapped to a directory in the container, to implement an objective of sharing a file or data between the host machine operating system and the container.

The load point A may be for mapping the inserted device. To be specific, the load point A may be for connecting, by the electronic device 100, a top directory (that is, the path of the device in the host machine operating system, for example, /storage/USB1/) in a device file to a subdirectory (that is, a directory A, for example, /data/rootfs/bridge/USB1/) of the first bridged directory, so that the electronic device 100 may access the device file by using the subdirectory. An association relationship between the top directory in the device file and the subdirectory of the first bridged directory may be recorded in the host machine operating system. Further, a specified file system in a specified device may be loaded to the load point A by using a common mount command in an operating system like Linux or Android. For example, the path (for example, /storage/USB1/) of the inserted device in the host machine operating system may be loaded to the load point A (that is, the first bridged directory, for example, /data/rootfs/bridge/) by inputting a command "mount /storage/USB1/ /data/rootfs/bridge/" into the host machine operating system, to obtain the subdirectory (that is, the directory A, for example, /data/rootfs/bridge/USB1/) at the load point A, so that the electronic device 100 may access the device file by using the directory A. The association relationship between the path of the device in the host machine operating system and the directory A at the load point A may be recorded in the host machine operating system.

A propagation attribute of a load point may be for specifying a propagation manner of a mapping action at the load point. It may be understood that, propagating the mapping action may mean that an association relationship between directories recorded in the host machine operating system (for example, between the path of the device in the host machine operating system and the directory A at the load point A) is propagated from the host machine operating system to the container. Specifically, the propagation attribute of the load point may include types such as shared (shared), private (private), and slave (slave). That the propagation attribute of the load point A is set to shared means that bidirectional propagation of a mapping action at the load point A in the host machine operating system may be performed between the load point A in the host machine operating system and a load point in the container may be performed, so that the directory at the load point A in the host machine operating system and a directory at the load point in the container may be synchronously updated. For example, after the device is inserted, the path (for example, /storage/USB1/) of the device in the host machine operating system is mapped to the load point A (for example, /data/rootfs/bridge/). The mapping action may be propagated to the load point in the container, so that an application in the container may access a file and data in the device by using a device directory (that is, a directory B, for example, /bridge/USB 1/) at the load point in the container. Further, after the device is removed, a device directory (that is, the directory A, for example, /data/rootfs/bridge/USB1/) at the load point A in the host machine operating system is unmapped, and the directory A (for example, /data/rootfs/bridge/USB 1/) is deleted. The mapping action may be propagated to the load point in the container, and the device directory (that is, the directory B, for example, /bridge/USB1/) at the load point in the container is synchronously deleted. In addition, the load point A in the host machine operating system may receive a mapping action propagated by the load point in the container. For example, the device directory (that is, the directory B, for example, /bridge/USB1/) at the load point in the container is unmapped, and the directory B (for example, /bridge/UTSB1/) is deleted. The load point A in the host machine operating system may receive the mapping action, and the device directory (that is, the directory A, for example, /data/rootfs/bridge/USB1/) at the load point A in the host machine operating system is synchronously deleted. That the propagation attribute of the load point A is set to private means that the mapping action at the load point A in the host machine operating system cannot be propagated to the load point in the container, and the load point A in the host machine operating system cannot receive the mapping action propagated by the load point in the container. That the propagation attribute of the load point A is set to slave means that the mapping action at the load point A in the host machine operating system cannot be propagated to the load point in the container, but the load point A in the host machine operating system may receive the mapping action propagated by the load point in the container.

S102: Create a load point B based on the load point A, and set a propagation attribute of the load point B to shared.

Specifically, when the container is run, a container engine (not shown in the figure) in the host machine operating system may create an isolation space for the container. The isolation space may be for isolating a load point in the container from a load point in the host machine operating system. The host machine operating system may map the first bridged directory (that is, the load point A, for example, /data/rootfs/bridge/) to the isolation space in the container by invoking a container engine interface (not shown in the figure) in the host machine operating system, to obtain a second bridged directory (for example, /bridge/), and set the second bridged directory (for example, /bridge/) as the load point B. The propagation attribute of the load point B is set to shared, and a specific command may be, for example, "unshare -m --propagation shared". The second bridged directory has the same lifecycle as the container. In this way, both the propagation attribute of the load point B in the container and the propagation attribute of the load point A in the host machine operating system are shared, so that a mapping action may be propagated between the load point B in the container and the load point A in the host machine operating system. That the propagation attribute of the load point B is set to shared means that bidirectional propagation of a mapping action at the load point B in the container may be performed between the load point B in the container and the load point A in the host machine operating system, so that a directory at the load point B in the container and the directory at the load point A in the host machine operating system may be synchronously updated. For example, a device directory (that is, the directory B, for example, /bridge/USB1/) at the load point B in the container is unmapped, and the directory B (for example, /bridge/USB1/) is deleted. The mapping action may be propagated to the load point A in the host machine operating system, and the device directory (that is, the directory A, for example, /data/rootfs/bridge/USB1/) at the load point A in the host machine operating system is synchronously deleted. In addition, the load point B in the container may receive a mapping action propagated by the load point A in the host machine operating system. For example, after the device is inserted, the path (for example, /storage/USB1/) of the device in the host machine operating system is mapped to the load point A (for example, /data/rootfs/bridge/). The load point B in the container may receive the mapping action, so that the application in the container may access the file and the data in the device by using the device directory (that is, the directory B, for example, /bridge/USB1/) at the load point B in the container. For another example, after the device is removed, the device directory (that is, the directory A, for example, /data/rootfs/bridge/USB1/) at the load point A in the host machine operating system is unmapped, and the directory A (for example, /data/rootfs/bridge/USB 1/) is deleted. The load point B in the container may receive the mapping action, and the device directory (that is, the directory B, for example, /bridge/USB1/) at the load point B in the container is synchronously deleted. That the propagation attribute of the load point B is set to private means that the mapping action at the load point B in the container cannot be propagated to the load point A in the host machine operating system, and the load point B in the container cannot receive the mapping action propagated by the load point A in the host machine operating system. That the propagation attribute of the load point B is set to slave means that the mapping action at the load point B in the container cannot be propagated to the load point A in the host machine operating system, but the load point B in the container may receive the mapping action propagated by the load point A in the host machine operating system.

S103: Register the callback of the hot plug event of the device.

S104: Notify the hot plug event of the device through the callback.

Specifically, the device service module in the host machine operating system may include an interface configured to register the callback of the hot plug event of the device. After the container is run, the container convergence service module in the host machine operating system may invoke the interface to register the callback of the hot plug event of the device with the device service module. After the device service module in the host machine operating system learns of the hot plugging of the device, the device service module in the host machine operating system may notify, through the callback, the container convergence service module in the host machine operating system of the hot plug event of the device. It is easy to understand that, the container convergence service module in the host machine operating system automatically registers the callback of the hot plug event of the device with the device service module in the host machine operating system, without triggering by a user. In this way, the electronic device 100 may support the host machine operating system in quickly detecting the hot plug event of the device, thereby reducing system power consumption.

S105: Obtain the path of the device.

Specifically, after the container convergence service module in the host machine operating system obtains a notification that the device is inserted, the container convergence service module in the host machine operating system may obtain the path (for example, /storage/USB1/) of the device in the host machine operating system through the device service module in the host machine operating system, where the path of the device is stored in the host machine operating system. It is easy to understand that, the container convergence service module in the host machine operating system automatically obtains the path of the device, without triggering by the user.

S106: Map the path of the device to the directory A at the load point A.

Specifically, the container convergence service module in the host machine operating system may map the path (for example, /storage/USB1/) of the device to the directory A (for example, /data/rootfs/bridge/USB1/) at the load point A. In other words, the container convergence service module in the host machine operating system may connect the path (for example, /storage/USB1/) of the device to the directory A (for example, /data/rootfs/bridge/USB1/) at the load point A, so that the host machine operating system may access the device file by using the directory A. Further, the specified file system in the specified device may be loaded to the load point A by using the common mount command in the operating system like Linux or Android. For example, the path (for example, /storage/USB1/) of the inserted device in the host machine operating system may be loaded to the load point A (for example, /data/rootfs/bridge/) by inputting the command "mount /storage/USB1/ /data/rootfs/bridge/" into the host machine operating system, to obtain the directory A (for example, /data/rootfs/bridge/USB 1/) at the load point A, so that the host machine operating system may access the device file by using the directory A. Because both the propagation attribute of the load point A in the host machine operating system and the propagation attribute of the load point B in the container are shared, the mapping action, at the load point A in the host machine operating system, of mapping the path of the device to the directory A may be propagated to the load point B in the container, to generate the directory B (for example, /bridge/USB1/) at the load point B.

In this way, on the premise that the container is not run again, the application in the container may access the directory A by accessing the directory B, to access the file and the data in the device.

S107: Unmap the path of the device, and delete the directory A.

Specifically, after the container convergence service module in the host machine operating system obtains a notification that the device is removed, the container convergence service module may unmap the path (for example, /storage/USB 1/) of the device from the directory A (for example, /data/rootfs/bridge/USB1/) at the load point A in the host machine operating system, and delete the directory A. Because both the propagation attribute of the load point A in the host machine operating system and the propagation attribute of the load point B in the container are shared, the mapping action, at the load point A in the host machine operating system, of unmapping the path of the device from the directory A may be propagated to the load point B in the container, to delete the directory B (for example, /bridge/USB1/) at the load point B.

In this way, on the premise that the container is not run again, the application in the container cannot access the file and the data in the device by accessing the directory B.

S108: In response to a trigger operation, delete the mapping action of mapping the path of the device to the directory A.

Specifically, when the device remains inserted, in response to the trigger operation on the device management application run in the container, the electronic device 100 may delete, in the container, the mapping action that of mapping the path (for example, /storage/USB1/) of the device to the directory A (for example, /data/rootfs/bridge/USB1/) and that is received by the load point B (for example, /bridge/) from the load point A in the host machine operating system, to delete the directory B (for example, /bridge/USB1/) at the load point B. In this way, on the premise that the container is not run again and the device remains inserted, the electronic device 100 may independently unmap the device from the container (that is, eject the device), without affecting use of the device by the host machine operating system.

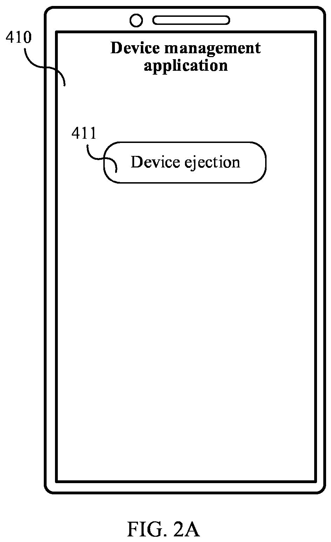

For example, as shown in FIG. 2A, the electronic device 100 may display a user interface 410. The user interface 410 may include a device ejection option (for example, an option 411), where the device ejection option may be for triggering independently unmapping the device from the container (that is, ejecting the device).

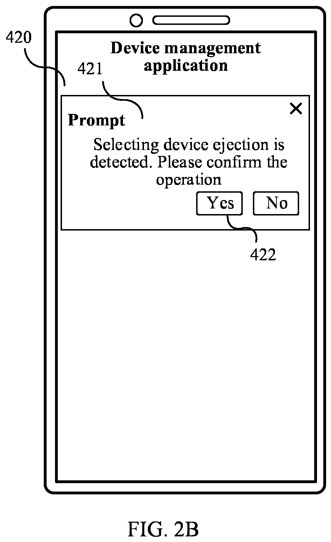

The electronic device 100 may receive a single tap operation (for example, an operation of taping the option 411) performed by the user on the device ejection option; and in response to the input operation, the electronic device 100 may display a user interface 420 shown in FIG. 2B.

For example, as shown in FIG. 2B, the user interface 420 may include a prompt dialog box (for example, a prompt dialog box 421), and the prompt dialog box may include text prompt information (for example, "Selecting device ejection is detected. Please confirm the operation ") for prompting the user to confirm ejecting the device. In some embodiments, a type of prompt information included in the prompt dialog box 421 may alternatively be a picture, a video, audio, or the like. This is not limited in this embodiment of this application. In addition, the prompt dialog box may further include one or more options (for example, an option 422), and the option 422 may be for triggering the electronic device 100 to confirm independently unmapping the device from the container (that is, ejecting the device).

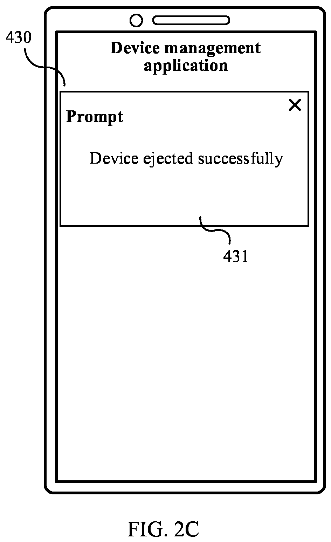

The electronic device 100 may receive an input operation (for example, a single tap) performed by the user on the option 422; and in response to the input operation, the electronic device 100 may display a user interface 430 shown in FIG. 2C.

For example, as shown in FIG. 2C, the user interface 430 may include a prompt dialog box (for example, a prompt dialog box 431), and the prompt dialog box may include text prompt information (for example, "Device ejected successfully") for prompting the user that the device ejection operation succeeds. In some embodiments, a type of prompt information included in the prompt dialog box 431 may alternatively be a picture, a video, audio, or the like. This is not limited in this embodiment of this application.

In this way, the electronic device 100 may support the hot plugging of the device during running of the container, so that the user may open a file in the device in the container without running the container again, thereby improving user experience.

FIG. 3 shows an example of a specific procedure of another device management method according to an embodiment of this application.

The method may be applied to an electronic device 100. The electronic device 100 runs a host machine operating system, and the host machine operating system runs a container. The host machine operating system may include a container convergence application and a device service module. The container convergence application may receive a trigger operation of a user for mapping a device, and in response to the trigger operation, may obtain a path of the device in the host machine operating system, and map the path of the device to a first bridged directory in the host machine operating system; may receive a trigger operation of the user for unmapping the device, and in response to the trigger operation, may unmap the device (to be specific, unmap the path of the device from the first bridged directory); or may create a load point in the host machine operating system. The device service module may transfer the path of the device in the host machine operating system to the container convergence application. The container may run a device management application. The device management application may manage ejection of the device in the container.

The foregoing host machine operating system and an operating system in the container may be operating systems of a same type (for example, both are Linux operating systems), or may be two different types of operating systems (for example, the host machine operating system is a Windows operating system, and the operating system in the container is a Linux operating system). This is not limited in this embodiment of this application.

The foregoing device is a device that has a corresponding directory (path) in the host machine operating system after being inserted into a host machine, and may include but is not limited to a storage device, for example, a mobile device like a USB flash drive or a hard disk, or a network device like a web disk. As shown in FIG. 3, the method may include the following steps.

S201: Create a load point A, and set a propagation attribute of the load point A to shared.

S202: Create a load point B based on the load point A, and set a propagation attribute of the load point B to shared.

Step S201 and step S202 are similar to step S101 and step S102 shown in FIG. 1. For a specific execution process of step S201 and step S202, refer to related text descriptions in step S101 and step S102 shown in FIG. 1. Details are not described again.

S203: Receive the trigger operation, and obtain the path of the device.

Specifically, the container convergence application in the host machine operating system may receive the trigger operation of the user for mapping the device; and in response to the trigger operation, the container convergence application in the host machine operating system may obtain the path of the device in the host machine operating system from the device service module in the host machine operating system, where the path of the device is stored in the host machine operating system.

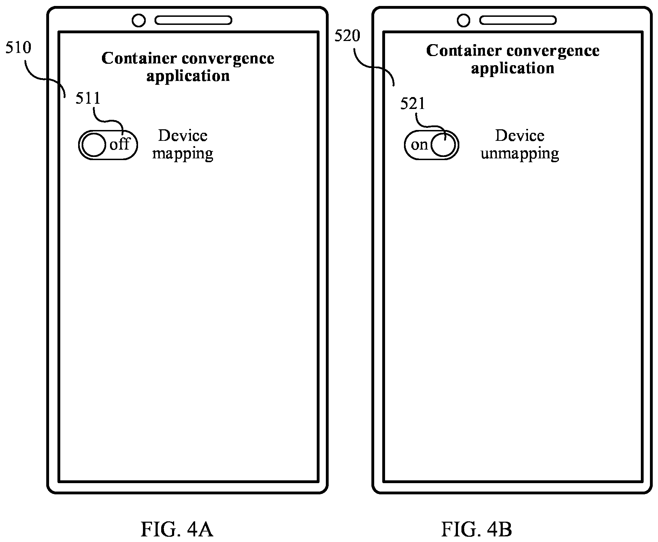

For example, as shown in FIG. 4A, the electronic device 100 may display a user interface 510. The user interface 510 may include a device mapping control (for example, a control 511) in an off state. The device mapping control may be configured to trigger the electronic device 100 to obtain the path of the device and map the path of the device to the first bridged directory.

The electronic device 100 may receive an input operation (for example, a single tap) performed by the user on the device mapping control; and in response to the input operation, the electronic device 100 may obtain the path of the device and map the path of the device to the first bridged directory.

After mapping the path of the device to the first bridged directory, the electronic device 100 may display a user interface 520 shown in FIG. 4B. The user interface 520 may include a device mapping control (for example, a control 521) in an on state.

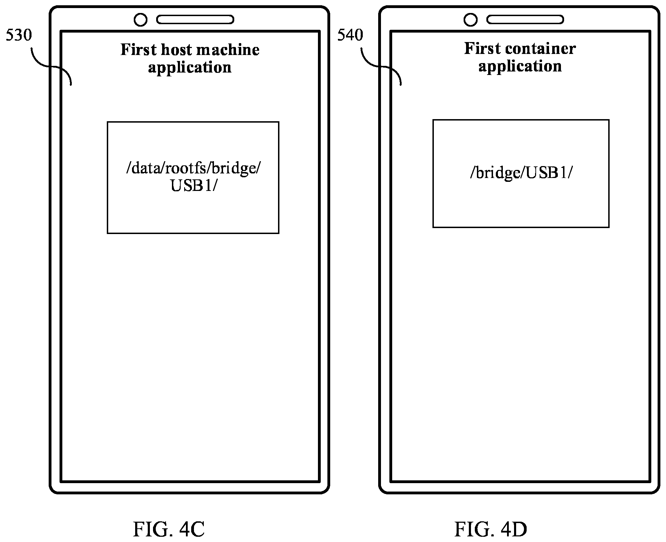

For example, as shown in FIG. 4C, after mapping the path of the device to the first bridged directory, the electronic device 100 may display a user interface 530 on a first host machine application in the host machine operating system. A directory A (for example, /data/rootfs/bridge/USB1/) may be displayed on the user interface 530.

For example, as shown in FIG. 4D, after mapping the path of the device to the first bridged directory, the electronic device 100 may display a user interface 540 on a first container application in the container. A directory B (for example, /bridge/USB1/) may be displayed on the user interface 540.

S204: Map the path of the device to the directory A at the load point A.

Step S204 is similar to step S106 shown in FIG. 1. For a specific execution process of step S204, refer to related text descriptions in step S106 shown in FIG. 1. Details are not described again.

S205: Unmap the path of the device, and delete the directory A.

Specifically, the container convergence application in the host machine operating system may receive the trigger operation of the user for unmapping the device; and in response to the trigger operation, the container convergence application may unmap the path (for example, /storage/USB1/) of the device from the directory A (for example, /data/rootfs/bridge/USB1/) at the load point A in the host machine operating system, and delete the directory A. Because both the propagation attribute of the load point A in the host machine operating system and the propagation attribute of the load point B in the container are shared, the mapping action, at the load point A in the host machine operating system, of unmapping the path of the device from the directory A may be propagated to the load point B in the container, to delete the directory B (for example, /bridge/USB1/) at the load point B.

In this way, on the premise that the container is not run again, an application in the container cannot access a file and data in the device by accessing the directory B.

For example, as shown in FIG. 4B, the electronic device 100 may display the user interface 520. The user interface 520 may include the device mapping control (for example, the control 521) in the on state. The device mapping control may be configured to trigger the electronic device 100 to unmap the device (to be specific, unmap the path of the device from the first bridged directory).

The electronic device 100 may receive an input operation (for example, a single tap) performed by the user on the device mapping control; and in response to the input operation, the electronic device 100 may unmap the device (to be specific, unmap the path of the device from the first bridged directory).

After unmapping the device, the electronic device 100 may display the user interface 510 shown in FIG. 4A. The user interface 510 may include the device mapping control (for example, the control 511) in the off state.

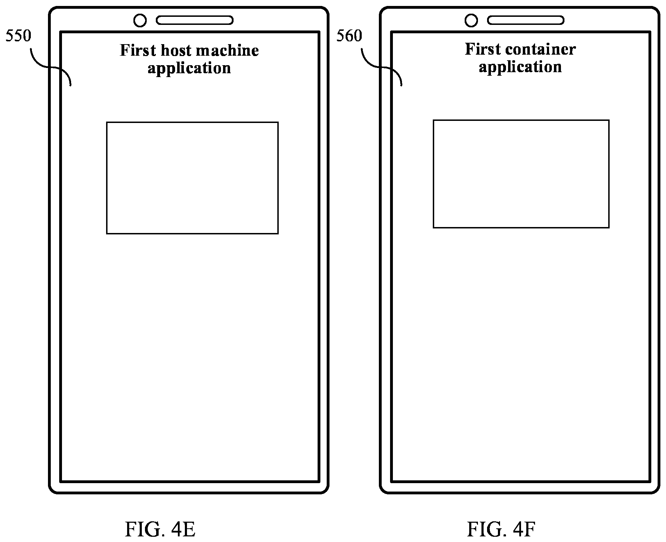

For example, as shown in FIG. 4E, after unmapping the device, the electronic device 100 may display a user interface 550 on the first host machine application in the host machine operating system. Because the directory A (for example, /data/rootfs/bridge/USB1/) has been deleted, the directory A (for example, /data/rootfs/bridge/USB1/) is not displayed on the user interface 550.

For example, as shown in FIG. 4F, after unmapping the device, the electronic device 100 may display a user interface 560 on the first container application in the container. Because the directory B (for example, /bridge/USB1/) has been deleted, the directory B (for example, /bridge/USB1/) is not displayed on the user interface 560.

S206: In response to a trigger operation, delete a mapping action of mapping the path of the device to the directory A.

Step S206 is similar to step S108 shown in FIG. 1. For a specific execution process of step S206, refer to related text descriptions in step S108 shown in FIG. 1. Details are not described again.

In this way, the electronic device 100 may support the user in manually controlling hot plugging of the device in the container during running of the container, so that the user may open a file in the device in the container without running the container again, thereby improving user experience.

FIG. 5 shows an example of a specific procedure of another device management method according to an embodiment of this application.

The method may be applied to an electronic device 100. The electronic device 100 runs a host machine operating system, and the host machine operating system runs a container. The host machine operating system may include a container convergence service module and a device service module. The container convergence service module may receive a notification of a device being inserted that is sent by a device management application in the container, obtain a path of the device in the host machine operating system based on the notification, and map the path of the device to a first bridged directory in the host machine operating system; may receive a notification of the device being removed that is sent by the device management application in the container, and unmap the device (to be specific, unmap the path of the device from the first bridged directory) based on the notification; or may create a load point in the host machine operating system. The device service module may transfer the path of the device in the host machine operating system to the container convergence service module. The container may run the device management application. The device management application may receive a trigger operation of a user, and in response to the trigger operation, send a notification of a hot plug event of the device to the container convergence service module; and may manage ejection of the device in the container.

The foregoing host machine operating system and an operating system in the container may be operating systems of a same type (for example, both are Linux operating systems), or may be two different types of operating systems (for example, the host machine operating system is a Windows operating system, and the operating system in the container is a Linux operating system). This is not limited in this embodiment of this application.

The foregoing device is a device that has a corresponding directory (path) in the host machine operating system after being inserted into a host machine, and may include but is not limited to a storage device, for example, a mobile device like a USB flash drive or a hard disk, or a network device like a web disk.

As shown in FIG. 5, the method may include the following steps.

S301: Create a load point A, and set a propagation attribute of the load point A to shared.

S302: Create a load point B based on the load point A, and set a propagation attribute of the load point B to shared.

Step S301 and step S302 are similar to step S101 and step S102 shown in FIG. 1. For a specific execution process of step S301 and step S302, refer to related text descriptions in step S101 and step S102 shown in FIG. 1. Details are not described again.

S303: Receive the trigger operation, and send the notification of the hot plug event of the device.

S304: Obtain the path of the device.

Specifically, the device management application run in the container may receive a trigger operation of the user for mapping the device; and in response to the trigger operation, the device management application run in the container may send, to the container convergence service module in the host machine operating system, the notification that the device is inserted.

Specifically, after the container convergence service module in the host machine operating system receives the notification that the device is inserted, the container convergence service module in the host machine operating system may obtain the path of the device in the host machine operating system, where the path of the device is stored in the host machine operating system.

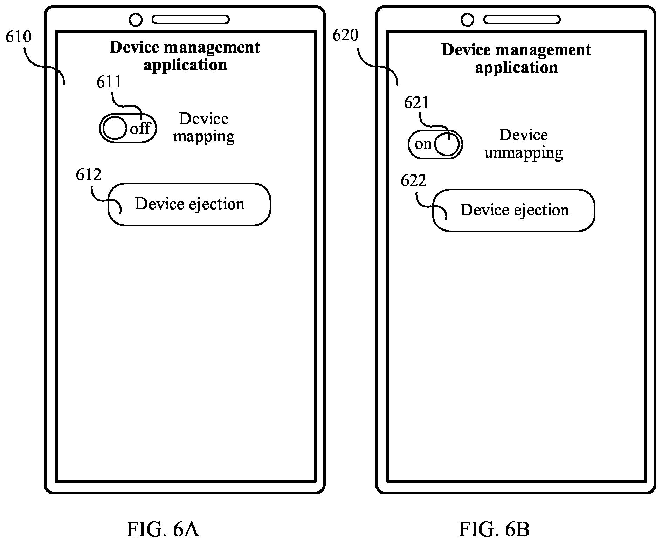

For example, as shown in FIG. 6A, the electronic device 100 may display a user interface 610. The user interface 610 may include a device mapping control (for example, a control 611) in an off state. The device mapping control may be configured to trigger the electronic device 100 to obtain the path of the device and map the path of the device to the first bridged directory.

The electronic device 100 may receive an input operation (for example, a single tap) performed by the user on the device mapping control; and in response to the input operation, the electronic device 100 may obtain the path of the device and map the path of the device to the first bridged directory.

After mapping the path of the device to the first bridged directory, the electronic device 100 may display a user interface 620 shown in FIG. 6B. The user interface 620 may include a device ejection option (for example, an option 622) and a device mapping control (for example, a control 621) in an on state.

For example, as shown in FIG. 4C, after mapping the path of the device to the first bridged directory, the electronic device 100 may display a user interface 530 on a first host machine application in the host machine operating system. A directory A (for example, /data/rootfs/bridge/USB1/) may be displayed on the user interface 530.

For example, as shown in FIG. 4D, after mapping the path of the device to the first bridged directory, the electronic device 100 may display a user interface 540 on a first container application in the container. A directory B (for example, /bridge/USB1/) may be displayed on the user interface 540.

S305: Map the path of the device to the directory A at the load point A.

Step S305 is similar to step S106 shown in FIG. 1. For a specific execution process of step S305, refer to related text descriptions in step S106 shown in FIG. 1. Details are not described again.

S306: Unmap the path of the device, and delete the directory A.

Specifically, the device management application run in the container may receive a trigger operation of the user for unmapping the device; and in response to the trigger operation, the device management application run in the container may send, to the container convergence service module in the host machine operating system, the notification that the device is removed.

Specifically, after the container convergence service module in the host machine operating system receives the notification that the device is removed, the container convergence service module in the host machine operating system may unmap the path (for example, /storage/USB1/) of the device from the directory A (for example, /data/rootfs/bridge/USB1/) at the load point A in the host machine operating system, and delete the directory A. Because both the propagation attribute of the load point A in the host machine operating system and the propagation attribute of the load point B in the container are shared, the mapping action, at the load point A in the host machine operating system, of unmapping the path of the device from the directory A may be propagated to the load point B in the container, to delete the directory B (for example, /bridge/USB1/) at the load point B.

In this way, on the premise that the container is not run again, an application in the container cannot access a file and data in the device by accessing the directory B.

For example, as shown in FIG. 6B, the electronic device 100 may display the user interface 620. The user interface 620 may include the device mapping control (for example, the control 621) in the on state. The device mapping control may be configured to trigger the electronic device 100 to unmap the device (to be specific, unmap the path of the device from the first bridged directory).

The electronic device 100 may receive an input operation (for example, a single tap) performed by the user on the device mapping control; and in response to the input operation, the electronic device 100 may unmap the device (to be specific, unmap the path of the device from the first bridged directory).

After unmapping the device, the electronic device 100 may display the user interface 610 shown in FIG. 6A. The user interface 610 may include the device mapping control (for example, the control 611) in the off state.

For example, as shown in FIG. 4E, after unmapping the device, the electronic device 100 may display a user interface 550 on the first host machine application in the host machine operating system. Because the directory A (for example, /data/rootfs/bridge/USB1/) has been deleted, the directory A (for example, /data/rootfs/bridge/USB1/) is not displayed on the user interface 550.

For example, as shown in FIG. 4F, after unmapping the device, the electronic device 100 may display a user interface 560 on the first container application in the container. Because the directory B (for example, /bridge/USB1/) has been deleted, the directory B (for example, /bridge/USB1/) is not displayed on the user interface 560.

S307: In response to the trigger operation, delete a mapping action of mapping the path of the device to the directory A.

Specifically, when the device remains inserted, in response to the trigger operation on the device management application run in the container, the electronic device 100 may delete, in the container, the mapping action that of mapping the path (for example, /storage/USB1/) of the device to the directory A (for example, /data/rootfs/bridge/USB1/) and that is received by the load point B (for example, /bridge/) from the load point A in the host machine operating system, to delete the directory B (for example, /bridge/USB1/) at the load point B. In this way, on the premise that the container is not run again and the device remains inserted, the electronic device 100 may independently unmap the device from the container (that is, eject the device), without affecting use of the device by the host machine operating system.

For example, as shown in FIG. 6A, the electronic device 100 may further include a device ejection option (for example, an option 612), where the device ejection option may be for triggering independently unmapping the device from the container (that is, ejecting the device).

The electronic device 100 may receive a single tap operation (for example, an operation of taping the option 612) performed by the user on the device ejection option; and in response to the input operation, the electronic device 100 may display a user interface 630 shown in FIG. 6C.

For example, as shown in FIG. 6C, the user interface 630 may include a prompt dialog box (for example, a prompt dialog box 631), and the prompt dialog box may include text prompt information (for example, "Selecting device ejection is detected. Please confirm the operation ") for prompting the user to confirm ejecting the device. In some embodiments, a type of prompt information included in the prompt dialog box 631 may alternatively be a picture, a video, audio, or the like. This is not limited in this embodiment of this application. In addition, the prompt dialog box may further include one or more options (for example, an option 632), and the option 632 may be for triggering the electronic device 100 to confirm independently unmapping the device from the container (that is, ejecting the device).

The electronic device 100 may receive an input operation (for example, a single tap) performed by the user on the option 632; and in response to the input operation, the electronic device 100 may display a user interface 640 shown in FIG. 6D.

For example, as shown in FIG. 6D, the user interface 640 may include a prompt dialog box (for example, a prompt dialog box 641), and the prompt dialog box may include text prompt information (for example, "Device ejected successfully") for prompting the user that the device ejection operation succeeds. In some embodiments, a type of prompt information included in the prompt dialog box 641 may alternatively be a picture, a video, audio, or the like. This is not limited in this embodiment of this application.

In this way, the electronic device 100 may support the user in manually controlling hot plugging of the device in the container during running of the container, so that the user may open a file in the device in the container without running the container again, thereby improving user experience.

The following describes an example of an electronic device 100 provided in embodiments of this application.

FIG. 7 shows an example of a structure of an electronic device 100 according to an embodiment of this application.

The electronic device 100 is used below as an example to describe embodiments in detail. It should be understood that, the electronic device 100 may have more or fewer components than those shown in FIG. 7, may combine two or more components, or may have different component configurations. Various components shown in FIG. 7 may be implemented by using hardware including one or more signal processing and/or application-specific integrated circuits, software, or a combination of hardware and software.

As shown in FIG. 7, the electronic device 100 may include a processor 110, an external memory interface 120, an internal memory 121, a universal serial bus (universal serial bus, USB) interface 130, a charging management module 140, a power management module 141, a battery 142, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural network processing unit (neural network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete instruction fetching and control instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface complying with a USB standard, and may be a mini USB interface, a micro USB interface, a USB type-C interface, or the like. The USB interface 130 may be configured to connect to a charger to charge the electronic device 100, or may be configured to transmit data between the electronic device 100 and a peripheral device. In this embodiment of this application, the electronic device 100 may be connected to a mobile device (for example, a USB flash drive or a hard disk) through the USB interface. The interface may be further configured to connect to another electronic device like an AR device.

The charging management module 140 is configured to receive a charging input from the charger.

The power management module 141 is configured to connect the battery 142, the charging management module 140, and the processor 110. The power management module 141 receives an input of the battery 142 and/or the charging management module 140, and supplies power to the processor 110, the internal memory 121, an external memory, and the like.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, or may include a nonvolatile memory, for example, at least one magnetic disk storage device, a flash memory device, or a universal flash storage (universal flash storage, UFS).

In this embodiment of this application, the electronic device 100 may further connect to a network device (for example, a web disk) through a network (for example, wireless fidelity (wireless fidelity, Wi-Fi) or ethernet) to access a server of a cloud storage service provider, to access and manage a file and data stored in the network device.

In this embodiment of this application, a device type of the electronic device 100 may be any one of a mobile phone, a tablet computer, a handheld computer, a desktop computer, a laptop computer, an ultra-mobile personal computer (ultra-mobile personal computer, UMPC), a netbook, a personal digital assistant (personal digital assistant, PDA), or the like. A specific type of the electronic device 100 is not limited in embodiments of this application.

In this embodiment of this application, infringement evidence may be obtained by checking, outside a container (that is, in a host machine), whether a container inside-outside bridged directory (that is, the foregoing first bridged directory, for example, /data/rootfs/bridge/) is set as a load point and a propagation attribute of the load point is set to shared (shared). For example, an instruction # cat /proc/1/mountinfo|grep "/data/rootfs/bridge/" is input into a host machine operating system. If a return result exists and the return result includes the attribute of shared, it indicates that the container inside-outside bridged directory (for example, /data/rootfs/bridge/) is set as the load point and the propagation attribute of the load point is set to shared.

In this embodiment of this application, infringement evidence may be obtained by checking, outside the container (in the host machine), whether a device (the mobile device or the network device) directory is mapped to another directory (for example, /data/rootfs/bridge/USB1/) of the container inside-outside bridged directory (that is, the foregoing first bridged directory, for example, /data/rootfs/bridge/). For example, an instruction # mount|grep USB is input into the host machine operating system. If a result "tmpfs on /data/rootfs/bridge/USB1/" is displayed, it indicates that a directory of a device (for example, a USB 1) is mapped to the container inside-outside bridged directory (that is, the first bridged directory, for example, /data/rootfs/bridge/).

An embodiment of this application further provides a computer-readable storage medium. The computer-readable storage medium stores a computer program. When the computer program is executed by a processor, the steps performed by the electronic device in the foregoing method embodiments, or steps performed by a human-machine interaction module and a computation module may be implemented.

An embodiment of this application further provides a computer program product. When the computer program product is run on a terminal device, the terminal device may be caused to implement the steps performed by the electronic device in the foregoing method embodiments.

An embodiment of this application further provides a chip system. The chip system includes a processor. The processor is coupled to a memory, and the processor executes a computer program stored in the memory, to implement the steps performed by the electronic device in any of the method embodiments of this application. The chip system may be a single chip or a chip module including a plurality of chips.

The term "user interface (user interface, UI), which is referred to as an interface briefly", in the specification and the accompanying drawings of this application is a medium interface for interaction and information exchange between an application or an operating system and a user, and implements conversion between an internal form of information and a form acceptable to the user. A user interface of the application is source code written in a specific computer language like Java or an extensible markup language (extensible markup language, XML). The interface source code is parsed and rendered on a terminal device, and finally presented as user-recognizable content, for example, a control like a picture, text, or a button. A control (control) is also referred to as a component (widget), and is a basic element of the user interface. Typical controls include a toolbar (toolbar), a menu bar (menu bar), a text box (text box), a button (button), a scrollbar (scrollbar), a picture, and text. An attribute and content of the control in the interface are defined by using a tag or a node. For example, the control included in the interface is defined in the XML by using a node like <Textview>, <ImgView>, or <VideoView>. One node corresponds to one control or attribute in the interface. After being parsed and rendered, the node is displayed as user-visible content. In addition, interfaces of many applications such as a hybrid application (hybrid application) usually further include a web page. The web page is also referred to as a page, and may be understood as a special control embedded in an application interface. The web page is source code written in a specific computer language, for example, a hypertext markup language (hypertext markup language, HTML), cascading style sheets (cascading style sheets, CSS), or a java script (Java Script, JS). The web page source code may be loaded and displayed as user-recognizable content by a browser or a web page display component with a function similar to that of the browser. Specific content included in the web page is also defined by using a tag or a node in the web page source code. For example, an element and an attribute of the web page are defined in the HTML by using <p>, <img>, <video>, and <canvas>.

A frequently-used representation form of the user interface is a graphical user interface (graphical user interface, GUI), and is a user interface that is displayed in a graphical manner and that is related to a computer operation. It may be an interface element like an icon, a window, or a control displayed on a display of the electronic device. The control may include a visual interface element like an icon, a button, a menu, a tab, a text box, a dialog box, a status bar, a navigation bar, and a widget.

In conclusion, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

It may be understood that, sequence numbers of the foregoing processes do not mean execution sequences in various embodiments of this application. The execution sequences of the processes should be determined based on functions and internal logic of the processes, and should not be construed as any limitation on the implementation processes of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or a part of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, like a ROM, a random access memory RAM, a magnetic disk, or an optical disc.

## Claims

1. A device management method, applied to a first electronic device, wherein the first electronic device runs a host machine operating system, the host machine operating system runs a first container, and the method comprises:
before the first container is started, creating, by the first electronic device, a first bridged directory in the host machine operating system, and setting the first bridged directory as a first load point;
when the first container is started, creating, by the first electronic device, a second load point in the first container based on information about the first load point;
after the first container is started, obtaining a notification that a device is inserted, obtaining, by the first electronic device, a path of the device in the host machine operating system, and mapping the path of the device to a first directory at the first load point, wherein that the path of the device is mapped to the first directory is a first mapping action;
propagating, by the first electronic device, the first mapping action to the second load point in the first container by using the first load point in the host machine operating system; and
obtaining, by the first electronic device in the first container, a second directory at the second load point based on the first mapping action.

2. The method according to claim 1, wherein a propagation attribute of the first load point is set to shared, and a propagation attribute of the second load point is set to shared.

3. The method according to claim 1 or 2, wherein the creating, by the first electronic device, the second load point in the first container based on the information about the first load point specifically comprises:
mapping, by the first electronic device, the first bridged directory to a second bridged directory in the first container through the host machine operating system, and creating the second bridged directory as the second load point in the first container.

4. The method according to any one of claims 1 to 3, wherein the method further comprises:
after the first container is started, obtaining a notification that the device is removed; and
unmapping, by the first electronic device in the host machine operating system, the path of the device from the first directory at the first load point, and deleting the first directory at the first load point.

5. The method according to any one of claims 1 to 3, wherein the method further comprises:
when the device remains inserted, in response to a trigger operation, deleting, by the first electronic device in the first container, the mapping action that is of mapping the path of the device to the first directory and that is received by the second load point from the first load point in the host machine operating system.

6. The method according to any one of claims 1 to 3, wherein the host machine operating system comprises a container convergence service module and a device service module; and the obtaining the notification that the device is inserted, obtaining, by the first electronic device, the path of the device in the host machine operating system, and mapping the path of the device to the first directory at the first load point specifically comprises:
if the first electronic device detects, through the device service module, that the device is inserted, notifying, by the device service module, the container convergence service module through a callback; and
obtaining, by the first electronic device in the host machine operating system, the path of the device from the device service module through the container convergence service module, and mapping the path of the device to the first directory at the first load point.

7. The method according to claim 6, wherein the device service module comprises a first interface, and the first interface is configured to register a callback of a hot plug event of the device.

8. The method according to any one of claims 1 to 5, wherein the obtaining the notification that the device is inserted specifically comprises:
receiving, by the first electronic device in the host machine operating system, a trigger operation through a first application; and
the obtaining, by the first electronic device, the path of the device in the host machine operating system, and mapping the path of the device to the first directory at the first load point specifically comprises:
obtaining, by the first electronic device in the host machine operating system, the path of the device through the first application, and mapping the path of the device to the first directory at the first load point.

9. The method according to any one of claims 1 to 5, wherein the obtaining the notification that the device is inserted specifically comprises:
receiving, by the first electronic device in the first container, a trigger operation through a second application; and
sending, by the first electronic device in the first container, a first notification to the host machine operating system, wherein the first notification indicates that the device is inserted.

10. An electronic device, wherein the electronic device runs a host machine operating system, and the host machine operating system runs a first container;
before the first container is started, the host machine operating system is configured to create a first bridged directory, and set the first bridged directory as a first load point;
when the first container is started, the first container is configured to create a second load point based on information about the first load point;
after the first container is started, a notification that a device is inserted is obtained, and the host machine operating system is configured to obtain a path of the device, and map the path of the device to a first directory at the first load point, wherein that the path of the device is mapped to the first directory is a first mapping action;
the host machine operating system is configured to propagate the first mapping action to the second load point in the first container by using the first load point; and
the first container is configured to obtain a second directory at the second load point based on the first mapping action.

11. The electronic device according to claim 10, wherein a propagation attribute of the first load point is set to shared, and a propagation attribute of the second load point is set to shared.

12. The electronic device according to claim 10 or 11, wherein the first container is specifically configured to create a second bridged directory as the second load point; and
the host machine operating system is configured to map the first bridged directory to the second bridged directory in the first container.

13. The electronic device according to any one of claims 10 to 12, wherein
after the first container is started, the host machine operating system is further configured to obtain a notification that the device is removed; and
the host machine operating system is further configured to unmap the path of the device from the first directory at the first load point, and delete the first directory at the first load point.

14. The electronic device according to any one of claims 10 to 12, wherein when the device remains inserted, in response to a trigger operation, the first container is further configured to delete the mapping action that is of mapping the path of the device to the first directory and that is received by the second load point from the first load point in the host machine operating system.

15. The electronic device according to any one of claims 10 to 12, wherein the host machine operating system comprises a container convergence service module and a device service module; and
if it is detected that the device is inserted, the device service module is configured to notify the container convergence service module through a callback; and
the container convergence service module is configured to obtain the path of the device from the device service module, and map the path of the device to the first directory at the first load point.

16. The electronic device according to claim 15, wherein the device service module comprises a first interface, and the first interface is configured to register a callback of a hot plug event of the device.

17. The electronic device according to any one of claims 10 to 14, wherein the host machine operating system is specifically configured to receive a trigger operation through a first application; and
the host machine operating system is specifically configured to obtain the path of the device through the first application, and map the path of the device to the first directory at the first load point.

18. The electronic device according to any one of claims 10 to 14, wherein the host machine operating system is specifically configured to receive a first notification sent by the first container, wherein the first notification indicates that the device is inserted; and
the first container is configured to receive a trigger operation through a second application.

19. A computer storage medium, wherein the computer storage medium stores a computer program, and when the computer program is executed by a processor, an electronic device is caused to perform the method according to any one of claims 1 to 9.

20. A computer program product, comprising a computer program, wherein when the computer program is executed by a processor, an electronic device is caused to perform the method according to any one of claims 1 to 9.
